# DEMANDE DE BREVET EUROPEEN

(11) **EP 1 780 364 A2**
(43) Date de publication de la demande: **02.05.2007**
(21) Numéro de dépôt: 06301071.4
(22) Date de dépôt: 20.10.2006
(51) Int. Cl.: E06B 1/60

(54) **Dispositif de fixation pour huisserie ou analogue**

(30) Priorité: 26.10.2005 FR 0553253; 26.10.2005 FR 0553254
(71) Demandeur: Schitter, Gabrielle, 24700 Menesplet (FR)
(72) Inventeur: SCHITTER, René, 74500, BERNEX (FR)
(74) Mandataire: Fantin, Laurent

(57) **Abrégé**

L'objet de l'invention est un clameau utilisé pour la fixation d'une huisserie ou analogue à un mur, caractérisé en ce qu'il comprend un corps (44) sous forme de plaque avec au niveau d'une face un bossage (46) et au niveau de l'autre face un logement (48) débouchant via un orifice (49) au niveau du bossage (46), dont les formes sont adaptées à celles de la tête (50) d'une vis (42) pour permettre d'immobiliser en rotation ladite tête.

## Description

La présente invention se rapporte à un dispositif de fixation pour huisserie ou analogue.

Pour fixer le dormant d'une huisserie au niveau d'une baie, on utilise des pattes avec deux branches à 90°, dont une est reliée au mur et l'autre au dormant.

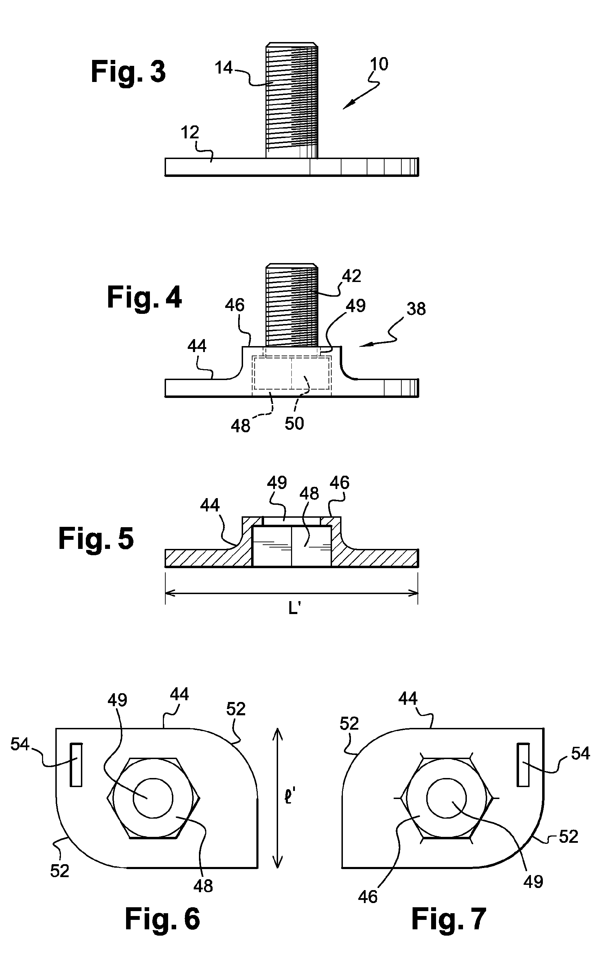

La patte comprend au niveau de chaque branche, un trou oblong permettant le passage d'éléments de liaison. Pour assurer la liaison entre le mur et la patte, on utilise tous dispositifs de fixation appropriés, tels que par exemple des vis, des tire-fonds ou analogue. Pour assurer la liaison entre le dormant et la patte, on utilise des clameaux qui se logent dans une rainure en T ménagée au niveau de la face extérieure des montants. Un clameau 10 est représenté sur la figure 3. Il comprend une platine 12 susceptible d'être disposée dans la partie large d'une rainure et un goujon 14 serti sur la platine 12. Pour assurer la liaison entre la patte et le dormant, la platine du clameau est insérée dans la rainure et un écrou est vissé sur le goujon qui traverse le trou oblong de la patte, pour solidariser l'ensemble.

Ce type d'assemblage ne donne pas satisfaction pour les raisons suivantes :
Compte tenu des efforts de serrage, le sertissage entre le goujon et la platine peut être endommagé voire se rompre. Dans ce cas, pour que le dormant soit correctement fixé au mur, il est nécessaire de remplacer le clameau endommagé ou cassé ce qui s'avère généralement problématique dans la mesure où les autres éléments de fixation sont généralement serrés.
Par ailleurs, en utilisant ce type de clameau, le serrage de l'écrou provoque généralement un ceintrage de la branche de la patte de fixation si bien que la branche de la patte susceptible d'être fixée au mur s'écarte de ce dernier, rendant difficile sa fixation.
Enfin, les pattes ne sont pas suffisamment rigides et tendent à se déformer.
La présente invention vise à pallier les inconvénients de l'art antérieur, en proposant un dispositif de fixation de conception simple, permettant d'obtenir un ancrage solide.
A cet effet, l'invention a pour objet un clameau utilisé pour la fixation d'une huisserie ou analogue à un mur, caractérisé en ce qu'il comprend un corps sous forme de plaque avec au niveau d'une face un bossage et au niveau de l'autre face un logement débouchant via un orifice au niveau dudit bossage, dont les formes sont adaptées à celles de la tête d'une vis pour permettre d'immobiliser en rotation ladite tête.
L'invention a également pour objet un dispositif de fixation comportant ledit clameau.

D'autres caractéristiques et avantages ressortiront de la description qui va suivre de l'invention, description donnée à titre d'exemple uniquement, en regard des dessins annexés sur lesquels :
- la figure 1 est une vue en élévation illustrant une huisserie fixée au niveau d'une baie d'un mur,
- la figure 2 est une vue en perspective illustrant un dispositif de fixation selon l'invention,
- la figure 3 est une vue en élévation d'un clameau selon l'art antérieur,
- la figure 4 est une vue en élévation d'un clameau selon l'invention,
- la figure 5 est une coupe du corps d'un clameau selon l'invention,
- la figure 6 est une vue de dessous du corps du clameau illustré sur la figure 5,
- la figure 7 est une vue de dessus du corps du clameau illustré sur la figure 5,
- la figure 8 est une vue de dessus illustrant un dispositif de fixation selon l'invention,
- la figure 9 est une vue de dessus illustrant en détails le corps du clameau mis en place dans une rainure, et
- la figure 10 est une coupe illustrant le profil d'une patte selon un mode de réalisation préféré de l'invention.

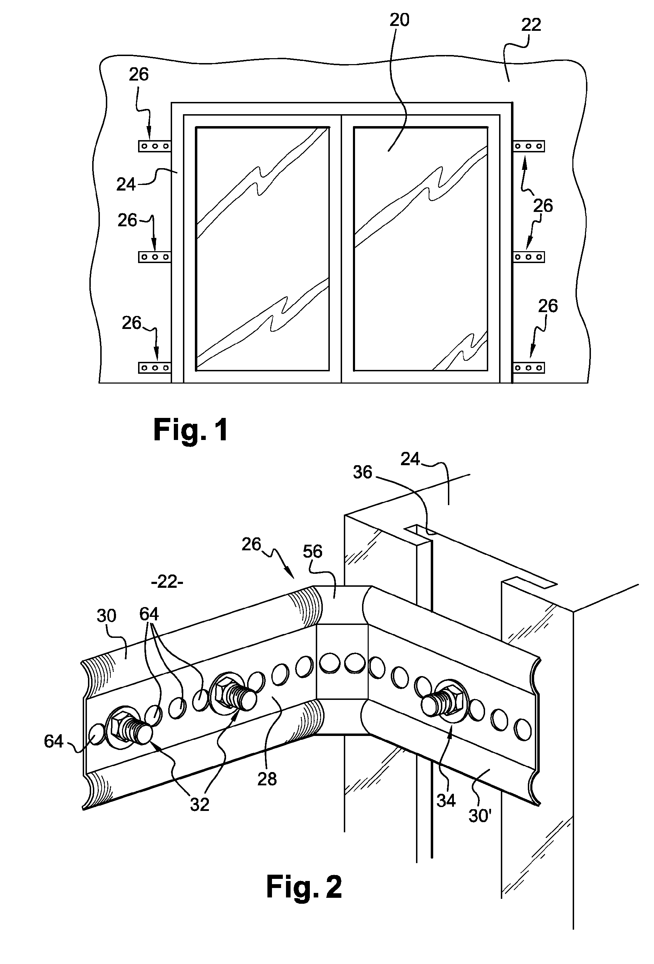

Sur la figure 1, on a représenté en 20 une huisserie susceptible d'être rapportée au niveau d'une baie ou ouverture d'un mur 22. Cette huisserie comprend un dormant 24 solidarisé au mur grâce à des dispositifs de fixation 26 répartis au niveau des montants du dormant 24.

La présente invention bien que décrite pour une huisserie de type porte coulissante peut s'appliquer à toutes les huisseries quelle que soit l'articulation prévue entre le dormant et l'ouvrant.

Comme illustré en détail sur la figure 2, chaque dispositif de fixation comprend une patte 28 formant équerre, selon les cas, pliée à 90° en une seule fois ou en plusieurs fois, la somme des angles étant égale à environ 90°. Ainsi, la patte 28 comporte une première branche 30 susceptible d'être reliée au mur 22 par des premiers moyens 32 de liaison et une seconde branche 30' susceptible d'être reliée au dormant 24 par des seconds moyens 34 de liaison.

Les premiers moyens 32 de liaison peuvent se présenter sous la forme de vis, de tire-fonds ou analogue. Ils ne sont pas plus décrits car ils sont à la portée de l'homme du métier.

Les seconds moyens 34 de liaison comprennent d'une part une rainure 36 avec une embouchure réduite ménagée au niveau du dormant 24, et d'autre part, un clameau 38 susceptible d'être lié à la patte 28 grâce à un écrou 40 et dont une partie est susceptible d'être logée dans la rainure 36.

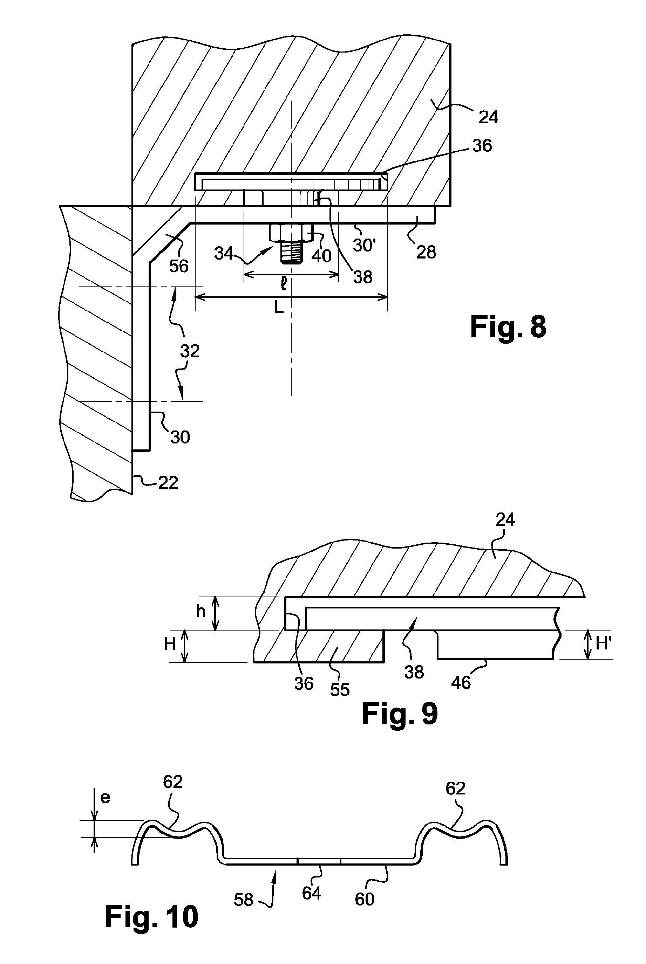

Selon un mode de réalisation, la rainure 36 a une forme en T, le pied du T ayant une hauteur H et la tête du T ayant une hauteur h, comme illustré sur la figure 9. Le pied du T formant l'embouchure de la rainure a une largeur l inférieure à la largeur L de la tête du T.

Selon l'invention, le clameau 38 comprend d'une part une vis 42 et d'autre part un corps 44, illustré en détail sur la figure 5, sous forme de plaque avec au niveau d'une face un bossage 46 et au niveau de l'autre face un logement 48 débouchant via un orifice 49 au niveau du bossage 46, dont les formes sont adaptées à celles de la tête 50 de ladite vis 42 pour permettre d'immobiliser en rotation ladite tête.

La hauteur H' du bossage est sensiblement égale à la hauteur H de la rainure, de l'ordre de 2 à 6 mm, ou légèrement inférieure afin que le bossage constitue une surface d'appui pour la patte lors du serrage afin de réduire les effets de ceintrage de la patte. Ainsi, le bossage offre une surface d'appui sensiblement au même niveau que la surface extérieure du dormant. La hauteur H' peut varier de 0.1 en 0.1 mm pour s'adapter à différentes hauteurs de rainures.

Le logement 48 a une forme hexagonale ajustée à celle d'une tête de vis hexagonale M6. Ainsi, contrairement au clameau de l'art antérieur, la résistance à la torsion n'est pas reprise exclusivement par un sertissage entre la partie filetée et la partie plate du clameau, mais par l'intermédiaire des surfaces de contact entre la tête 50 de la vis 42 et le logement 48 ce qui permet d'augmenter sensiblement la résistance à la torsion du clameau.

Le bossage peut avoir une forme hexagonale susceptible d'être manoeuvrée par une clé à pipe ou plate de 13 afin de faciliter sa mise en place.

Par ailleurs, le logement 48 étant ménagé dans le bossage, ce dernier offre une surface de contact importante, supérieure à celle que pourrait procurer la tête d'une vis à tête hexagonale M6 si cette dernière était soudée sur une plaque.

De préférence, la vis 42 est reliée au corps 44 par tous moyens appropriés, tels que par exemple grâce à un point de soudure ou être sertie.

Le corps 44 du clameau a une longueur L' sensiblement égale à la largeur L de la rainure 36 mais supérieure à la largeur l de l'embouchure.

De préférence, le corps 44 du clameau se présente sous la forme d'un rectangle avec une largeur l'inférieure à l'embouchure I pour permettre l'introduction du clameau 38 dans la rainure 36 via l'embouchure.

Pour faciliter la mise en place du clameau dans la rainure, ce dernier comprend, diagonalement opposés, des angles 52 biseautés ou des rayons de l'ordre de 5 mm pour permettre le pivotement du clameau dans la rainure. Avantageusement, une fente 54 est prévue au niveau du clameau pour faciliter ce pivotement. Ainsi, le clameau est inséré à la « verticale ». Pour le positionner et le maintenir dans la rainure, il suffit d'effectuer un quart de tour à droite pour qu'il soit maintenu dans la rainure pendant le vissage, à droite aussi, de l'écrou 40 à embase crantée.

Les bords du clameau susceptible d'être en contact avec la rainure, ne sont pas crantés, ce qui permet d'obtenir une surface de contact plus importante sur l'intérieur de la rainure, et évite ainsi les arrachements et/ou écrasement du retour de rainure 55.

Selon les variantes, les bords du clameau peuvent être crantés ou non.

Selon un mode de réalisation, le corps du clameau est réalisé par emboutissage.

En complément, une rondelle peut être intercalée entre le clameau et la patte 28. Cette rondelle peut être en polypropylène pour former une rupture de pont thermique.

De manière connue, la patte 28 comprend une zone intermédiaire 56 inclinée par rapport aux branches pour dégager l'angle.

Selon l'invention, la patte 28 est emboutie sous presse ou profilée dans une bande 58, puis pliée afin d'obtenir les deux branches et la zone intermédiaire 56.

Cette bande 58 comprend un profil continu, la section transversale de la bande étant illustrée en détail sur la figure 10.

Cette bande comprend une partie centrale 60 avec de part et d'autre au moins une nervure 62 formant raidisseur.

Selon une caractéristique de l'invention, la partie centrale comprend une pluralité de trous 64 disposés selon la direction longitudinale de la bande, dont le diamètre est adapté à celui des vis 42. Ainsi, il n'est plus nécessaire de réaliser des trous oblongs après la découpe et le pliage de la patte. Les trous 64 sont réalisés avant de découper et de plier la patte ce qui tend à simplifier la fabrication et à réduire les coûts de production et de transport.

Selon une autre caractéristique de l'invention, les nervures 62 ont une section en forme de M ce qui tend à renforcer la raideur de la patte et limite ses déformations.

Selon un mode de réalisation, la partie centrale a une largeur de l'ordre de 13 à 20 mm, les nervures ont une largeur de l'ordre de 9 à 15 mm, une hauteur de l'ordre de 3 à 8 mm, l'écartement e entre les sommets et le creux du M étant de l'ordre de 1, 5 à 3 mm.

Ces cotes peuvent varier les unes des autres, dépendamment ou indépendamment selon les dimensions souhaitées par l'utilisateur. Ainsi, on pourrait avoir par exemple une partie centrale de 15 mm, des nervures de largeur de 9 mm avec une hauteur de 5 mm et un écartement entre sommets de 2 mm.

Selon un mode de réalisation, la patte a une épaisseur de l'ordre de 0,6 à 0,8 mm.

Bien entendu, l'invention n'est évidemment pas limitée au mode de réalisation représenté et décrit ci-dessus, mais en couvre au contraire toutes les variantes, notamment en ce qui concerne les dimensions et les matériaux des différents éléments.

## Revendications

1. Clameau utilisé pour la fixation d'une huisserie ou analogue à un mur, **caractérisé en ce qu'**il comprend un corps (44) sous forme de plaque avec au niveau d'une face un bossage (46) et au niveau de l'autre face un logement (48) débouchant via un orifice (49) au niveau du bossage (46), dont les formes sont adaptées à celles de la tête (50) d'une vis (42) pour permettre d'immobiliser en rotation ladite tête.

2. Clameau selon la revendication 1, **caractérisé en ce que** le bossage (46) a une hauteur H' telle que le bossage offre une surface d'appui sensiblement au même niveau que la surface extérieure de la huisserie lorsque le clameau est mis en place.

3. Clameau selon la revendication 1 ou 2, **caractérisé en ce que** le logement (48) est ménagé dans le bossage (46).

4. Clameau selon l'une quelconque des revendications précédentes, **caractérisé en ce que** le logement (48) a une forme hexagonale ajustée à celle d'une tête de vis hexagonale M6.

5. Clameau selon l'une quelconque des revendications précédentes, **caractérisé en ce que** le corps (44) du clameau se présente sous la forme d'un rectangle avec une largeur inférieure à l'embouchure de la rainure dans laquelle est susceptible d'être logé le clameau et comprend diagonalement opposés des angles biseautés ou des arrondis.

6. Dispositif de fixation pour huisserie ou analogue comprenant un clameau selon l'une quelconque des revendications précédentes.

7. Dispositif de fixation pour huisserie ou analogue selon la revendication 6, **caractérisé en ce qu'**il comprend une patte (28) avec deux branches à sensiblement 90°, dont l'une est reliée au mur et l'autre à l'huisserie.

8. Dispositif de fixation pour huisserie ou analogue selon la revendication 7, **caractérisé en ce que** la patte (28) a une section transversale comprenant une partie centrale (60) avec de part et d'autre au moins une nervure (62) en forme de M.

9. Dispositif de fixation pour huisserie ou analogue selon la revendication 8, **caractérisé en ce que** les nervures (62) ont une largeur de l'ordre de 9 à 15 mm, une hauteur de l'ordre de 3 à 8 mm, l'écartement e entre les sommets et le creux du M étant de l'ordre de 1, 5 mm à 3 mm.

10. Dispositif de fixation pour huisserie ou analogue selon l'une quelconque des revendications 7 à 9, **caractérisé en ce que** la patte (28) comprend une pluralité de trous (64) disposés selon la direction longitudinale de la patte, dont le diamètre est adapté à celui de la tige filetée du clameau.
